# EUROPEAN PATENT SPECIFICATION

(11) **EP 2 703 964 B1**
(45) Date of publication and mention of the grant of the patent: **22.11.2017**
(21) Application number: 13179396.0
(22) Date of filing: 06.08.2013
(51) Int. Cl.: G06F 3/041, G06F 1/18, G02F 1/1333

(54) **Touch-control screen and mobile communications device**
Berührungsbildschirm und mobile Kommunikationsvorrichtung
Écran tactile et dispositif de communication mobile

(30) Priority: 31.08.2012 CN 201220442450 U
(43) Date of publication of application: 05.03.2014
(73) Proprietor: Huawei Device (Dongguan) Co., Ltd., Dongguan, Guangdong, PRC, 523808 (CN)
(72) Inventor: Di, Wei, 518129 Shenzhen Guangdong (CN); Zou, Jie, 518129 Shenzhen Guangdong (CN)
(74) Representative: Thun, Clemens

(56) References cited:
- WO-A2-2011/017039
- CN-U- 201 590 065
- US-A1- 2010 215 931
- US-A1- 2012 087 065
- US-B1- 6 555 743

## Description

### TECHNICAL FIELD

The present invention
relates to the field of touch-control display, in particular, to a touch-control screen and a mobile communications device.

### BACKGROUND

A touch-control screen is the simplest, and most convenient and natural man-machine interactive manner at present. Endowing multimedia with a brand new look, the touch-control screen is applied to various types of electronic devices.

In a touch-control screen, a touch-control panel is arranged on a liquid crystal display, resulting in electromagnetic interference during the work period of the liquid crystal display. Further, the electromagnetic interference affects the performance of the touch-control pane and an electronic device installed with a touch-control screen. For example, for a mobile phone provided with a touch-control screen, the electromagnetic interference generated by the liquid crystal display may directly affect the performance of the touch-control screen and the mobile phone. Meanwhile, the electromagnetic interference generated by the liquid crystal display radiates out from the mobile phone through the touch-control panel. This may intensify the effect on the performance of a mobile phone antenna.

At present, a common method used for shielding the electromagnetic interference generated by the liquid crystal display is to add a conductive and light-penetrable shield layer between the touch-control panel and the liquid crystal display. Despite the effect on shielding the electromagnetic interference to a certain extent, this method has rather high costs.

CN201590065 U discloses a display component and electronic equipment adopting the display component. The display component comprises a touch screen and a display unit, wherein the touch screen comprises a shield layer arranged on a base layer, the shield layer is arranged on the upper surface of the display unit, a grounding device is also arranged on the display unit, and the grounding device is connected with a ground wire and the shield layer. The shield layer is grounded to achieve the complete shield against the electromagnetic interference of the display unit. In addition, the shield layer is coated on the display unit through a transparent conducting adhesive layer, and the transparent conducting adhesive layer can form a protective layer and is in good contact with the grounding device of an LCD, so that the shield layer is grounded to perform the shielding function, which minimizes the influence of electromagnetic radiation of the LCD on the touch screen.

WO2011/017039 A2 discloses antireflective transparent EMI shielding optical filters that can be laminated to optical display devices using optically clear adhesives. The provided filters include electrically-conductive metal or metal alloy layers that can be continuous and patterned or unpatterned.

US 6555743 B1 discloses a computer system including a number of option bays that accommodate optional peripheral equipment, such as CD-ROM drives, DVD drives, magnetic tape backup systems and Zip drives. An unpopulated bay is segmented into compartments by a divider that extends through substantially the entire depth of the bay so that each of the compartments operates as a waveguide beyond frequency cutoff (WBFC). The resulting compartments are characterized by cross-sectional dimensions that are less than the cross-sectional dimensions of the bay, so that the compartmentalization effects substantially enhanced attenuation of electromagnetic signals having a frequency at the highest expected operating frequency of the computer system.

US 20120087065 A1 discloses electronic devices such as computers and handheld devices. The electronic devices may have electrical components such as displays that are driven by driver circuitry. During operation, the driver circuitry may generate radio-frequency noise. Communications circuitry in the electronic devices may be shielded from the radio-frequency noise by radio-frequency shielding structures.

US 20100215931 A1 discloses a ITO layer structure, which is composed of the ITO as the outermost layer and the first anti-reflected layer on the specific side of the transparent substrate, furthermore, the second anti-reflected layer is formed on the opposite side of substrate, can improve the total transmittance.

### SUMMARY

The technical problem that the present invention needs to solve is to provide a touch-control screen and a mobile communications device, so as to effectively shield the electromagnetic interference generated by the liquid crystal display, simplify processing techniques, improve rigidity, and lower the costs. The solution to the foregoing technical problem provided by the present invention is defined in appended claim 1. Advantageous embodiments of the invention are defined in appended claims 2-6.

### BRIEF DESCRIPTION OF DRAWINGS

To illustrate the technical solutions in the embodiments of the present utility model or in the prior art more clearly, the following briefly introduces the accompanying drawings required for describing the embodiments or the prior art. Apparently, the accompanying drawings in the following description show merely some embodiments of the present utility model, and persons of ordinary skill in the art may still derive other drawings from these accompanying drawings without creative efforts.
FIG. 1 is a structural schematic diagram of a touch-control screen according to an embodiment of the present invention;
FIG. 2 is a structural schematic diagram of a cross-section of a touch-control panel according to an embodiment of the present invention; and
FIG. 3 is a structural schematic diagram of a bottom plane of a touch-control panel according to an embodiment of the present invention.

### DESCRIPTION OF EMBODIMENTS

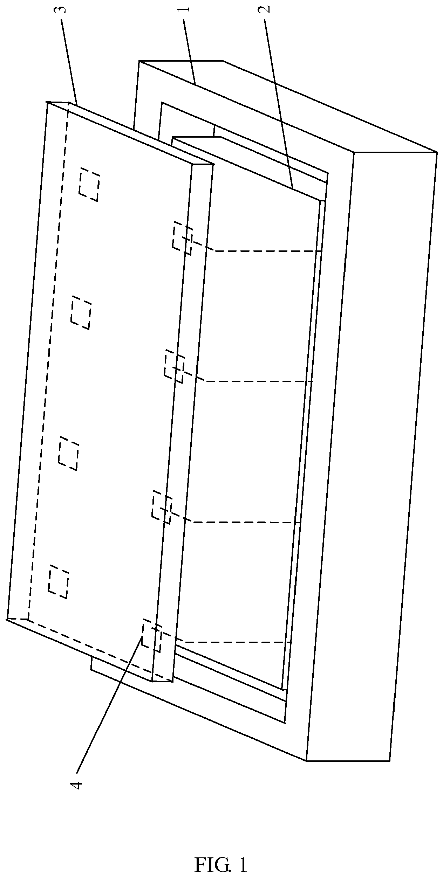

The following clearly and completely describes the technical solutions in the embodiments of the present invention with reference to the accompanying drawings in the embodiments of the present invention. Apparently, the described embodiments are merely a part rather than all of the embodiments of the present invention The present invention provides a touch-control screen. As shown in FIG. 1, the touch-control screen includes: a metal frame 1, a liquid crystal display 2 embedded into the metal frame 1, and a touch-control panel 3 covering the liquid crystal display 2, where the touch-control panel 3 includes a transparent conductive shield layer which is electrically connected to the metal frame.

The metal frame 1 is arranged on the outer side of the liquid crystal display 2 to support and protect the liquid crystal display 2; and the touch-control panel 3 covers the liquid crystal display 2 and forms an enclosed structure with the metal frame 1, so that the liquid crystal display 2 is sealed in the structure. Therefore, the electromagnetic interference generated by the liquid crystal display 2 is sealed in the enclosed structure formed by the metal frame 1 and the touch-control panel 3, may only radiate into the metal frame 1 or the touch-control panel 3, and may not directly radiate out of the enclosed structure.

Because the metal frame 1 is connected to a ground cable of an electronic device where the touch-control screen is located, and the transparent conductive shield layer in the touch-control panel 3 is electrically connected to the metal frame 1, the transparent conductive shield layer is also connected to the ground cable of the electronic device to form a shielded body. In this case, the electromagnetic interference generated on the top surface of the liquid crystal display 2 is absorbed by the transparent conductive shield layer in the touch-control panel 3 and is led to the ground cable. Therefore, the electromagnetic interference is prevented from penetrating the touch-control panel to interfere the touch-control panel and the electronic device. The electromagnetic interference generated on the lateral surface and the bottom surface of the liquid crystal display 2 is absorbed by the metal frame 1 and led to the ground cable. After the transparent conductive shield layer is electrically connected to the metal frame 1, the touch-control panel 3 and the metal frame 1 form an integrated structure that absorbs electromagnetic interference, where the structure encloses the liquid crystal display 2 inside, thereby effectively shielding the electromagnetic interference generated by the liquid crystal display 2.

In the touch-control screen according to the present invention the transparent conductive shield layer in the touch-control panel and the metal frame are electrically connected. Therefore, the touch-control panel and the metal frame form an integrated structure that absorbs electromagnetic interference, which effectively shields the electromagnetic interference generated by the liquid crystal display. Also, this manner of electromagnetic interference shielding has the benefits of simple processing techniques for manufacturing the shielding structure and low costs.

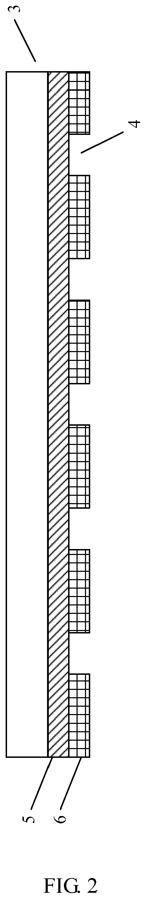

Further, according to the present invention, as shown in FIG. 1 and FIG. 2, the touch-control screen 3 further includes a silicon dioxide layer 6 arranged in the touch-control panel 3 at an end near the liquid crystal display 2, the transparent conductive shield layer 5 is arranged on the silicon dioxide layer 6 at an end far away from the liquid crystal display 2, the silicon dioxide layer 6 has through-holes 4, and the transparent conductive shield layer 5 is electrically connected to the metal frame 1 through the through-holes 4.

The touch-control panel 3 adopts a multi-layered structure which implements the touch-control function of the touch-control panel. In the multi-layered structure of the touch-control panel, the silicon dioxide layer 6 is arranged at the bottom, and the transparent conductive shield layer 5 is arranged on the silicon dioxide layer 6. According to the invention, the through-holes 4 are formed on the surface of the silicon dioxide layer 6, and the through-holes 4 penetrate the upper and lower surfaces of the silicon dioxide layer 6, so that part of the transparent conductive shield layer 5 arranged in the silicon dioxide layer 6 exposed out of the silicon dioxide layer 6 at the outermost layer of the touch-control panel 3. The exposed points of the transparent conductive shield layer 5 are connected to the metal frame 1 to achieve electric connection between the transparent conductive shield layer 5 and the metal frame 1 through the through-holes 4.

Optionally, the transparent conductive shield layer may be electrically connected to the metal frame through conductive adhesive or conductive foam. The exposed points of the transparent conductive shield layer may be electrically connected to the metal frame in an electroplating manner, and the exposed points of the transparent conductive shield layer may be connected to the metal frame through other transparent conductive materials, where one end of a conductive material is connected to the exposed points of the transparent conductive shield layer and the other end of the conductive material may be connected to the side wall on the inner wall of the metal frame, and the conductive material is arranged in a place other than that of the liquid crystal display, so that the arrangement of the liquid crystal display is not affected.

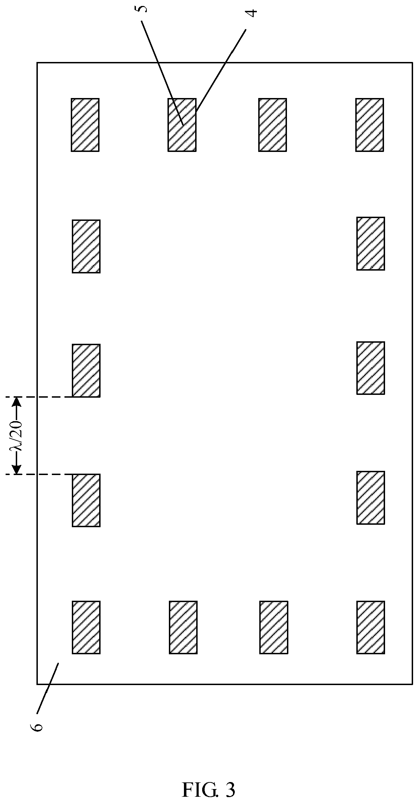

Further, in all embodiments of the present invention, as shown in FIG. 3, the silicon dioxide layer 6 has a plurality of through-holes, so that the transparent conductive shield layer 5 has a plurality of exposed points. Among the plurality of through-holes, optionally, according to an embodiment if the invention, the distance between two adjacent through-holes is the product of a wavelength of interference electromagnetic waves of the liquid crystal display and 1/20. If the wavelength of interference electromagnetic waves of the liquid crystal display is λ, set the distance between two adjacent through-holes 4 to be λ/20. Setting the distance between two adjacent through-holes 4 to be 1/20 of the interference wavelength may improve the shielding effect of the transparent conductive shield layer and prevent the leakage of interference electromagnetic waves.

Further, in an embodiment of the present invention, the through-holes are arranged near an edge of the silicon dioxide layer. The through-holes are arranged in a position near the four edges of the silicon dioxide layer, so that the length of a conductive material used for connecting the exposed points of the transparent conductive shield layer 5 and the metal frame is shortened to lower the costs. Meanwhile, the position of the conductive material may be near the edge of the touch-control panel to reduce the affect caused by the conductive material on the light transmission of the touch-control panel.

Further, in an embodiment of the present invention, the distance between the positions of the through-holes 4 and the edge of the silicon dioxide layer 6 is greater than or equal to the creepage distance of test voltage when a static test is performed on the touch-control screen. When a static test is performed on the touch-control screen, static electricity may directly act on the exposed points of the transparent conductive shield layer 5 through the edge of the touch-control panel to damage the touch-control panel, and therefore, in this embodiment, the distance between the through-holes 4 and the edge of the silicon dioxide layer 6 is set to be greater than or equal to the creepage distance of test voltage when the static test is performed. In this case, during the static test, the test voltage may not directly act on the exposed points of the transparent conductive shield layer 5 through the edge of the silicon dioxide layer 6, preventing the damage caused by static electricity on the touch-control panel.

An embodiment of the present invention provides a mobile communications device which includes the touch-control screen according to the foregoing embodiments. After the touch-control screen provided by the present invention is arranged on the mobile communications device, the electromagnetic interference generated by the liquid crystal display is effectively prevented from interfering with antennas of the mobile communications device.

In the touch-control screen and the mobile communications device provided by the embodiments of the present invention, the through-holes are arranged on the surface of the silicon dioxide layer, so that part of the transparent conductive shield layer is exposed out of the touch-control panel. By connecting the exposed points of the transparent conductive shield layer to the metal frame, the transparent conductive shield layer and the metal frame are electrically connected, and further, the touch-control panel and the metal frame form an integrated structure that absorbs electromagnetic interference, thereby effectively shielding electromagnetic interference generated by the liquid crystal display. Also, compared with electromagnetic interference shielding manners in the prior art, the invention has the benefits of simple processing techniques for manufacturing the shielding structure and low costs.

## Claims

1. A touch-control screen, comprising: a metal frame (1), a liquid crystal display (2) embedded into the metal frame, and a touch-control panel (3) covering the liquid crystal display, wherein the touch-control panel comprises a transparent conductive shield layer (5), and the transparent conductive shield layer is electrically connected to the metal frame,
**characterized in that**
the touch-control panel further comprises a silicon dioxide layer (6) arranged in the touch-control panel at an end near the liquid crystal display; the transparent conductive shield layer is arranged on the silicon dioxide layer farther away from the liquid crystal display than the silicon dioxide layer; the silicon dioxide layer has a plurality of through-holes (4); and the transparent conductive shield layer is electrically connected to the metal frame through the through-holes.

2. The touch-control screen according to claim 1, wherein the silicon dioxide layer has the plurality of through-holes, and among the plurality of through-holes, a distance between two adjacent through-holes is a product of a wavelength of interference electromagnetic waves of the liquid crystal display and 1/20.

3. The touch-control screen according to claim 2, wherein the plurality of through-holes are located near an edge of the silicon dioxide layer.

4. The touch-control screen according to claim 3, wherein the distance between the plurality of through-holes and the edge of the silicon dioxide layer is greater than or equal to a creepage distance of test voltage when a static test is performed on the touch-control screen.

5. The touch-control screen according to any one of claims 1 to 4, wherein the transparent conductive shield layer is connected to the metal frame through conductive adhesive or conductive foam.

6. A mobile communications device, comprising the touch-control screen according to claims 1 to 4.

## Patentansprüche

1. Berührungssteuerungsbildschirm, der Folgendes umfasst: einen Metallrahmen (1), eine Flüssigkristallanzeige (2), die in dem Metallrahmen eingebettet ist, und eine Berührungssteuerungsplatte (3), die die Flüssigkristallanzeige bedeckt, wobei die Berührungssteuerungsplatte eine transparente leitfähige Abschirmungsschicht (5) umfasst und wobei die transparente leitfähige Abschirmungsschicht elektrisch mit dem Metallrahmen gekoppelt ist,
**dadurch gekennzeichnet, dass**
die Berührungssteuerungsplatte ferner eine Siliciumdioxidschicht (6) umfasst, die in der Berührungssteuerungsplatte an einem Ende nahe der Flüssigkristallanzeige angeordnet ist;
die transparente leitfähige Abschirmungsschicht auf der Siliciumdioxidschicht weiter von der Flüssigkristallanzeige entfernt als die Siliciumdioxidschicht angeordnet ist; die Siliciumdioxidschicht mehrere Durchgangslöcher (4) aufweist; und die transparente leitfähige Abschirmungsschicht durch die Durchgangslöcher elektrisch mit dem Metallrahmen verbunden ist.

2. Berührungssteuerungsbildschirm nach Anspruch 1, wobei die Siliciumdioxidschicht die mehreren Durchgangslöcher aufweist und wobei unter den mehreren Durchgangslöchern ein Abstand zwischen zwei angrenzenden Durchgangslöchern ein Produkt einer Wellenlänge von elektromagnetischen Wellen einer Störung der Flüssigkristallanzeige und 1/20 ist.

3. Berührungssteuerungsbildschirm nach Anspruch 2, wobei sich die mehreren Durchgangslöcher nahe einem Rand der Siliciumdioxidschicht befinden.

4. Berührungssteuerungsbildschirm nach Anspruch 3, wobei der Abstand zwischen den mehreren Durchgangslöchern und dem Rand der Siliciumdioxidschicht größer als oder gleich einer Kriechstrecke einer Testspannung ist, wenn ein statischer Test an dem Berührungssteuerungsbildschirm durchgeführt wird.

5. Berührungsbildschirm nach einem der Ansprüche 1 bis 4, wobei die transparente leitfähige Abschirmungsschicht durch einen leitfähigen Klebstoff oder einen leitfähigen Schaum mit dem Metallrahmen verbunden ist.

6. Mobilkommunikationsvorrichtung, die den Berührungssteuerungsbildschirm nach den Ansprüchen 1-4 umfasst.

## Revendications

1. Écran tactile, comprenant: un cadre métallique (1), un dispositif d'affichage à cristaux liquides (2) logé dans le cadre métallique, et un panneau tactile (3) recouvrant le dispositif d'affichage à cristaux liquides, le panneau tactile comprenant une couche de protection conductrice transparente (5), et la couche de protection conductrice transparente étant reliée électriquement au cadre métallique,
**caractérisé en ce que**
le panneau tactile comprend en outre une couche de dioxyde de silicium (6) disposée dans le panneau tactile à une extrémité près du dispositif d'affichage à cristaux liquides ;
la couche de protection conductrice transparente est disposée sur la couche de dioxyde de silicium plus loin du dispositif d'affichage à cristaux liquides que la couche de dioxyde de silicium ;
la couche de dioxyde de silicium a une pluralité de trous traversants (4) ; et
la couche de protection conductrice transparente est reliée électriquement au cadre métallique par les trous traversants.

2. Écran tactile selon la revendication 1, dans lequel la couche de dioxyde de silicium a la pluralité de trous traversants, et parmi la pluralité de trous traversants, une distance entre deux trous traversants adjacents est un produit d'une longueur d'onde d'ondes électromagnétiques d'interférence du dispositif d'affichage à cristaux liquides par 1/20.

3. Écran tactile selon la revendication 2, dans lequel la pluralité de trous traversants est située près d'un bord de la couche de dioxyde de silicium.

4. Écran tactile selon la revendication 3, dans lequel la distance entre la pluralité de trous traversants et le bord de la couche de dioxyde de silicium est supérieure ou égale à une ligne de fuite d'une tension d'essai quand un essai statique est effectué sur l'écran tactile.

5. Écran tactile selon l'une quelconque des revendications 1 à 4, dans lequel la couche de protection conductrice transparente est reliée au cadre métallique par un adhésif conducteur ou une mousse conductrice.

6. Dispositif de communication mobile, comprenant l'écran tactile selon les revendications 1 à 4.
